# EUROPEAN PATENT SPECIFICATION

(11) **EP 4 491 460 B1**
(45) Date of publication and mention of the grant of the patent: **12.11.2025**
(21) Application number: 23188778.7
(22) Date of filing: 31.07.2023
(51) Int. Cl.: B60R 1/072, B60R 1/076

(54) **ACTUATOR BUFFER STRUCTURE, REAR-VIEW MIRROR AND VEHICLE**
AKTUATORPUFFERSTRUKTUR, RÜCKSPIEGEL UND FAHRZEUG
STRUCTURE DE TAMPON D'ACTIONNEUR, RÉTROVISEUR ET VÉHICULE

(30) Priority: 10.07.2023 CN 202310843211
(43) Date of publication of application: 15.01.2025
(73) Proprietor: Ningbo SMR Huaxiang Automotive Mirrors Limited, Zhejiang 315722 (CN)
(72) Inventor: PENG, Zhanglong, Xizhou Town 315722 (CN); ZHANG, Liang, Xizhou Town 315722 (CN)
(74) Representative: Weber-Bruls, Dorothée

(56) References cited:
- WO-A1-2023/006761
- CN-U- 217 705 650
- DE-B3- 102019 122 123
- DE-T5- 112017 001 911
- US-A1- 2021 086 694
- US-A1- 2022 176 878

## Description

The present disclosure relates to the field of automotive technology, specifically to an actuator buffer structure of the pre-amble of claim 1, a rear-view device with such an actuator buffer structure, and a motor vehicle with such a rear-view device.

A rear-view device presents different rear-views when different drivers drive the vehicle. Thus, the mirror surface needs to be adjusted to meet the needs of the different drivers. There are two ways to adjust the mirror surface of the rear-view device: front and rear folding and up and down adjustment.

The way to adjust the mirror surface is divided into electric and manual adjustment in the prior art. At present, the folding durability of rear-view devices via electric adjustment is relatively good. However, the gear is easily damaged in the manual adjustment process, so enhancing the folding durability of manual adjustment is an important factor to improve the quality of the rear-view devices.

DE 10 2019 122 123 B3 refers to an actuator for a rear-view device of a vehicle according to the preamble of claim 1, comprising a body defining a folding axis for the rear-view device, a tilt shaft having a fastening means for rotationally fixing the rear-view device to the tilt shaft and defining a tilt axis for the rear-view device, an actuator housing rotatably supported by the body and configured for rotatably supporting the tilt shaft, and a drive arrangement arranged entirely within the actuator housing and configured for rotating the actuator housing about the folding axis relative to the body by a folding angle and for rotating the tilt shaft about the tilt axis relative to the actuator housing by a tilt angle, wherein the drive arrangement comprises a tilt drive train for rotating the tilt shaft and a tilt drive train for rotating the actuator housing wherein the tilt drive train and the tilt drive train are configured to operate completely independently of each other by sharing a common axis.

WO2323/006761 A1 teaches a method for moving at least one rearview device of at least one rearview assembly around at least one first axis and around at least one second axis, by at least one actuator comprising at least one electrically driven first drive device and at least one electrically driven second drive device, characterized in that the method comprises controlling the first drive device and the second drive device such that only one of the drive devices is driven at a time.

DE 11 2017 001 911 T5 describes a mutually contacting support face of a case (swing body) and supported face of a gear plate slope toward an upper side, this being one axial direction side of a support shaft, on progression toward the axial center of the support shaft. Accordingly, when the gear plate receives drive force from a motor in a state in which the gear plate is engaged with a clutch plate, if the gear plate attempts to move in a radial direction while receiving rotation force in a circumferential direction, the sloping supported face of the gear plate receives a reaction force from the sloping support face of the case, such that the gear plate is suppressed from moving in the radial direction.

US 2021/0086694 A1 refers to a foldable exterior rearview mirror assembly for a vehicle comprising: a housing having an associated glass assembly secured thereto; a support arm for mounting the housing an associated vehicle side door, the support arm having a closed end portion at least partially received within an aperture in an underside of the housing; a pivot shaft mounted to the closed end portion of the support arm, the housing is foldable about the pivot shaft between a drive or use position and a folded or park position, wherein the closed end portion of the support arm includes an opening, and a wiring harness for connection to associated electronics housed in the housing is received through the opening and routed beneath the pivot shaft into the housing.

CN 217705650 U teaches an exterior rearview mirror assembly, which can be rotatably connected on a rearview mirror mounting seat, and comprises a mirror frame, a motor module, an inner fixing frame, and a rearview mirror support. The motor module comprises a shell, a shell seat, a first motor, and a second motor; the shell and the shell seat are rotatably connected around a rotating shaft of the first motor, and are pivotally connected to the inner fixing frame by means of a rotating shaft of the second motor; the bottom of the shell seat can penetrate through the rearview mirror support to be connected to the rearview mirror mounting seat; one part of the rearview mirror support can penetrate through the mirror frame to be connected to the rearview mirror mounting seat, and the other part of the rearview mirror support is located between the shell and the mirror frame and is spherically connected to the mirror frame. The mirror and the mirror frame rotate together, such that the width of the mirror frame protruding the mirror can be properly decreased, thereby achieving the purpose of decreasing the size of the exterior rearview mirror assembly and achieving the effect of small wind resistance.

US 2022/0176878 A1 discloses a rear view device for a vehicle, said rear view device comprising: a base adapted to be mounted to a side of the vehicle, wherein said base has a first attachment end disposed at the side of the vehicle and a second attachment end disposed opposite the first attachment end, the base including a base frame and a base cover; a head for supporting at least one component for providing a rearward field of view to a driver of the vehicle and being disposed at said second attachment end of said base, wherein said head comprises an aperture through which said base can be accessed and a case lower; an actuator comprising a first attachment component; a shroud comprising a second attachment component adapted to attach to said first attachment component of the actuator to fixedly attach said shroud to said actuator; a foot gasket attached to the base frame of the base, the foot gasket including a first lip portion that extends toward the shroud in a vertical direction and a second lip portion that contacts the shroud in a horizontal direction, wherein the base cover extends toward the first lip such that the foot gasket provides a seal between the shroud, the base frame and the base cover.

One objective of the present disclosure is to further develop the known actuator buffer structure to prevent damage to the actuator during manual adjustment.

In order to achieve the above objective, the technical solution adopted by the present disclosure is described in the characterizing portion of claim 1. Preferred embodiments of the actuator buffer structure of the present invention are described in claims 2 to 12.

Another objective of the present disclosure is to provide a rear-view device with good product quality. This object is solved in line with claim 13, with claim 14 describing a preferred embodiment.

Another objective of the present disclosure is to provide a vehicle with good product quality. This object is solved in line with claim 15.

Thus, an actuator buffer structure is provided, comprising a base frame for installing a rear-view element; an actuator fixedly installed and rotatably connected to the base frame; and a clutch assembly, wherein the output shaft of the actuator is connected to the base frame through the clutch assembly, wherein the actuator is suitable for driving the output shaft to rotate the base frame together with the rear-view element around the axis through the clutch assembly, wherein the base frame is capable of disengaging from the output shaft through the clutch assembly under external force, so that the base frame rotates together with the rear-view element relative to the output shaft via the actuator. When the actuator is started, the output shaft is able to drive the base frame together with the rear-view element to rotate around the axis via the clutch assembly. When the base frame and the rear-view element are rotated along the actuator by external force, the output shaft is disengaged from the base frame via the clutch assembly and remains stationary with the actuator.

According to the invention, the clutch assembly includes an adjusting buffer block and a spring; wherein the adjusting buffer block is axially slidably installed on the output shaft through a guiding structure, and the adjusting buffer block is adapted to be elastically connected to the actuator or the base frame through the spring. Further, the adjusting buffer block is linked with the base frame through the clutch assembly; and, when the actuator is started, the adjusting buffer block maintains engagement with the base frame in the circumferential direction through the clutch assembly under the action of elasticity; whereas, when the base frame is driven by external force, the adjusting buffer block disengages from the engagement with the base frame in the circumferential direction via the clutch assembly.

In an embodiment, the adjusting buffer block is slidably matched with the output shaft through a through-hole. The guiding structure may include a guide groove that is axially extended along the output shaft on the side, and a guiding block that is set on the side wall of the through-hole; wherein the guiding block is slidably matched with the guide groove along the axis and simultaneously limitedly matched with it along the circumferential direction.

According to the invention, the adjusting buffer block forms part of the clutch assembly by frictional engagement with the base frame in the circumferential direction through the end face. Thus, when the actuator is started, the driving force of the actuator is less than the frictional force between the end face of the adjusting buffer block and the base frame in the circumferential direction. When the base frame is driven by external force, the pressing force received by the base frame is greater than the frictional force but less than the self-locking force of the output shaft.

According to the present invention, the clutch assembly comprises a clutch groove set on the end face of the adjusting buffer block and a clutch block set on the base frame; wherein the clutch groove and the clutch block engage with each other along the circumferential direction via an inclined plane; such that, when the actuator is started, the driving force of the actuator is less than the engaging force of the clutch groove and the clutch block along the circumferential direction; and, when the base frame is driven by external force, the pressing force on the base frame is greater than the engaging force but less than the self-locking force of the output shaft.

**In** an embodiment, the clutch assembly further comprises a base frame buffer block, which can be detachably installed on the base frame. The base frame buffer block is adapted to axially slide with the adjusting buffer block via a connecting hole disposed at the center thereof, and by being matched with the positioning sleeve. The clutch block is disposed on the end face of the base frame buffer block, forming the clutch assembly between the adjusting buffer block and the base frame buffer block.

According to the present invention, the base frame includes a first installation area and a second installation area that are interconnected. The actuator is installed in the first installation area and the output shaft extends to the second installation area. The clutch assembly is installed in the second installation area, and the base frame buffer block is matched with the second installation area by means of a positioning structure.

**In** an embodiment, the clutch assembly is first installed on the output shaft, and then the actuator, together with the clutch assembly, is installed on the base frame. The base frame buffer block is connected to the side wall of the second installation area through fasteners at the center. The positioning structure includes at least one horizontal limiting surface set on the side of the base frame buffer block and at least one horizontal positioning surface set on the side of the second installation area. The base frame buffer block is adapted to fit against the positioning surface through the limiting surface.

**In** an embodiment, the end of the second installation area is provided with an installation sleeve penetrating the base frame, and the axis of the output shaft is aligned with the axis of the installation sleeve; wherein the actuator is first installed on the base frame, and then the clutch assembly is installed along the installation sleeve on the output shaft, and the base frame buffer block is fixed on the exterior of the installation sleeve by a pair of symmetrically arranged fasteners; the positioning structure includes a pair of positioning columns spaced apart and set on the outer end sides of the installation sleeve, and a pair of positioning hole spaced apart and set on the side of the base frame buffer block; and the base frame buffer block is adapted to be positioned and matched with the positioning columns via the positioning hole.

A rear-view device of the present disclosure comprises the above actuator buffer structure. A vehicle of the present disclosure comprises the above rear-view device.

Compared with the prior art, the present disclosure has the beneficial effects below:
By connecting the output shaft of the actuator to the base frame via the clutch assembly, damage to the actuator caused by relative rotation between the output shaft of the actuator and the actuator can be avoided by separating the clutch assembly during manual adjustment of the rear-view element angle; thereby effectively improving the service life of the actuator.

In order that the disclosure may be well understood, there will now be described various forms thereof, given by way of example, reference being made to the accompanying drawings, in which:
- FIG. 1: is a schematic diagram of the internal local structure of the rear-view device of the present disclosure.
- FIG. 2: is a schematic diagram of the separation state of the actuator and clutch assembly of the present disclosure.
- FIG. 3: is a schematic diagram of the structure of the actuator of the present disclosure.
- FIG. 4: is a schematic diagram of the structure of the adjusting buffer block in one embodiment of the present disclosure.
- FIG. 5: is a schematic diagram of the structure of the adjusting buffer block in another embodiment of the present disclosure.
- FIG. 6: is the second schematic diagram of the structure of the adjusting buffer block in another embodiment of the present disclosure.
- FIG. 7: is a schematic diagram of the structure of one embodiment of the base frame buffer block of the present disclosure.
- FIG. 8: is a schematic diagram of the other embodiment of the base frame buffer block of the present disclosure.
- FIG. 9: is a schematic diagram of another embodiment of the base frame buffer block of the present disclosure.
- FIG. 10: is a schematic diagram of the structure of one embodiment of the base frame of the present disclosure.
- FIG. 11: is a schematic diagram of the clutch assembly including the base frame buffer block shown in FIG. 7 installed on the base frame shown in FIG. 10 of the present disclosure.
- FIG. 12: is a schematic diagram of the clutch assembly including the base frame buffer block shown in FIG. 8 installed on the base frame shown in FIG. 9 of the present disclosure.
- FIG. 13: is a schematic diagram of another embodiment of the base frame structure of the present disclosure.
- FIG. 14: is a schematic diagram of the clutch assembly including the base frame buffer block shown in FIG. 9 installed on the base frame shown in FIG. 13 of the present disclosure.

The present disclosure is further described below in combination with specific implementations. It should be noted that the various embodiments or technical features described below can be arbitrarily combined to form new embodiments without conflicts, within the scoop of the appended claims.

In the description of the present disclosure, it should be noted that for orientation terms, orientations or positional relationships indicated by the terms "center", "transverse", "longitudinal", "length" "width", "thickness", "upper", "lower", "front", "rear", "left", "right", "vertical", "horizontal", "top", "bottom", "inside" or "interior", "outside" or "exterior", "clockwise", "anticlockwise", and the like are orientations or positional relationships as shown in the drawings, and are only for the purpose of facilitating and simplifying the description of the present disclosure instead of indicating or implying that devices or elements indicated must have particular orientations, and be constructed and operated in the particular orientations, so that these terms cannot construed as limiting the specific protection scope of the present disclosure.

It should be noted that the terms "first, "second, etc. in the specification and claims of the present disclosure are used to distinguish similar objects, and do not have to be used to describe a specific order or sequence.

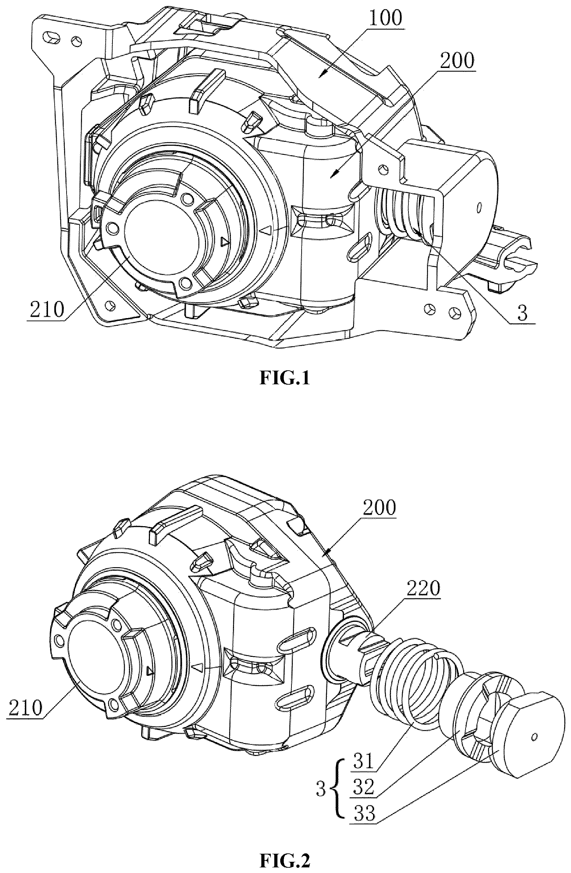

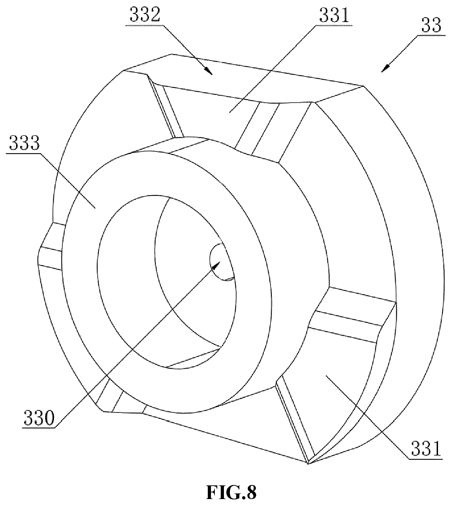

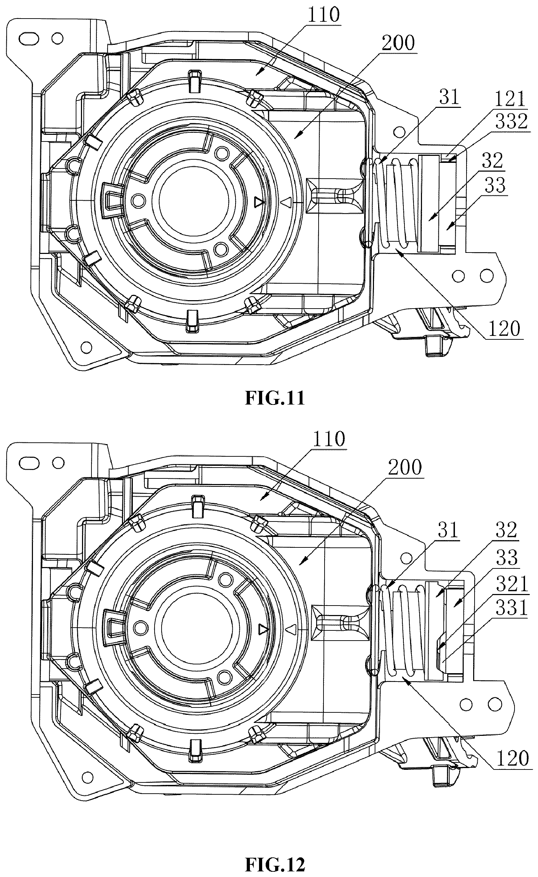

One aspect of the present disclosure provides an actuator buffer structure, as shown in FIG. 1 to FIG. 14. One preferred embodiment includes a base frame 100 for installing a rear-view element and an actuator 200 fixedly positioned and rotatably coupled to the base frame 100. The actuator 200 can drive the base frame 100 via an output shaft 220 to rotate the rear-view element about the axis of the output shaft 220 to achieve angular adjustment of the rear-view element. There is also a clutch assembly 3, which connects the output shaft 220 of the actuator 200 to the base frame 100.

When the user adjusts the angle of the rear-view element electrically, the actuator 200 is started. At this time, the clutch assembly 3 can maintain engagement, so that the actuator 200 can drive the rear-view element to deflect in a similar way as traditional methods, that is, the output shaft 220 of the actuator 200 is connected to the base frame 100 in the circumferential direction through the clutch assembly 3. Thus, after the actuator 200 is started, it can drive the base frame 100 together with the rear-view element to rotate by driving the rotation of the output shaft 220.

When the user manually adjusts the angle of the rear-view element, the actuator 200 is in a stopped state, and at this time, the base frame 100 can separate the clutch assembly 3 under manual drive to separate the actuator 200 together with the output shaft 220, which is self-locking, from the base frame 100 and keep them stationary. Then, the base frame 100 can drive the rear-view element to rotate around the axis of the output shaft 220 under manual drive. Compared to the traditional manual adjustment methods, during the rotation of the rear-view element, the actuator 200 and the output shaft 220 always remain relatively stationary, that is, there is no relative rotation between the two, thereby avoiding damage to the actuator 200 caused by the relative rotation of the output shaft 220 with respect to the actuator 200, and effectively improving the service life of the actuator 200.

It should be noted that, as shown in FIG. 1 to FIG. 3, one side of the actuator 200 is provided with an installation section 210, and the actuator 200 can be installed on the body of a motor vehicle (not shown) through the installation section 210. The axial extension direction of the installation section 210 is perpendicular to the axis of the output shaft 220; when the base frame 100 rotates in cooperation with the actuator 200, the axis of rotation of the base frame 100 can coincide with the axis of the output shaft 220.

It should be understood that the specific structure and working principle of the actuator 200 and rear-view element are well-known to those skilled in the art, and commonly used actuators 200 can use motors, etc. The rear-view element can be provided in form of a mirror and/or camera.

In the traditional methods of adjusting the angle of the rear-view element via the actuator 200, it is necessary to rotate the base frame 100 and the actuator 200 during installation, and fix the output shaft 220 of the actuator 200 to the base frame 100. Then, when the actuator 200 drives the output shaft 220 to rotate, the output shaft 220 can drive the base frame 100 and the installed rear-view element to rotate together. Since the stability of the rear-view element needs to be ensured during use, generally, after the actuator 200 stops, the actuator 200 can grip the output shaft 220 via a brake structure, to keep the base frame 100 stable with the help of the brake of the output shaft 220. Therefore, when manually pressing the base frame 100 to adjust the angle of the rear-view element, the driving force exerted on the base frame 100 by the output shaft 220 of the actuator 200 will forcibly disengage the brake and rotate around the actuator 200. This can easily cause damage to the brake structure of the actuator 200, and may cause the actuator 200 to malfunction and fail to maintain stability. And therefore reduce its folding durability.

Therefore, in this disclosure, the clutch assembly 3 is installed between the output shaft 220 of the actuator 200 and the base frame 100. When electrically adjusting the angle of the rear-view element, the clutch assembly 3 is in the engaged state, that is, the output shaft 220 of the actuator 200 and the base frame 100 are stably connected through the clutch assembly 3, so that the actuator 200 can stably drive the output shaft 220 to rotate the rear-view element. When manually adjusting the angle of the rear-view element, the clutch assembly 3 can separate the output shaft 220 and the base frame 100, so that the actuator 200 and the output shaft 220 form a whole through the self-locking structure of the holding brake. Under the manual driving force, the actuator 200 and the output shaft 220 remain stationary, so that the base frame 100 can drive the rear-view element to rotate around the axis of the output shaft 220 together with the base frame 100, whereas in contrast, traditionally a relative rotation between the actuator 200 and the output shaft 220 is avoided.

In one embodiment of the present disclosure, as shown in FIG. 2 to FIG. 14, the clutch assembly 3 comprises an adjusting buffer block 32 and a spring 31. The adjusting buffer block 32 can be axially slidably installed on the output shaft 220 through a guiding structure. That is, the adjusting buffer block 32 can only move axially relative to the output shaft 220 under the guidance of the guiding structure. At the same time, the adjusting buffer block 32 can be matched with the base frame 100 through the clutch assembly. The adjusting buffer block 32 can also be elastically connected to the actuator 200 or the base frame 100 through the spring 31, and the spring 31 can apply the necessary engagement force to the clutch assembly through spring force. Thus, when adjusting the rear-view element electrically, the adjusting buffer block 32 can be kept engaged with the base frame 100 under the action of the spring force of the spring 31 through the clutch assembly, and then the output shaft 220 can drive the base frame 100 to rotate synchronously under the engagement force of the clutch assembly, so that the base frame 100 drives the rear-view element to deflect around the axis of the output shaft 220 to achieve angle adjustment. When adjusting the rear-view element manually, the pressure applied manually will be greater than the engagement force applied to the clutch assembly by the spring 31, causing the clutch assembly to disengage and separate, and then the adjusting buffer block 32 can remain stationary through the clutch assembly, while the base frame 100 rotates relative to the adjusting buffer block 32. Since the adjusting buffer block 32 can only move axially relative to the output shaft 220, the output shaft 220 will also remain stationary with the adjusting buffer block 32, that is, the actuator 200, the output shaft 220 and the adjusting buffer block 32 will remain stationary synchronously, to ensure that there is no relative motion between the actuator 200 and the output shaft 220, thereby avoiding damage to the actuator 200 and the output shaft 220 due to relative rotation.

It should be understood that the spring 31 can apply a biting force to the clutch assembly by being opposed to the actuator 200 and the adjusting buffer block 32 at both ends, thus using the elastic force generated by the compression of the spring 31. Of course, the adjusting buffer block 32 can also be matched by being opposed to the base frame 100 through the spring 31 near the end close to the actuator 200, or the adjusting buffer block 32 can also be matched by being opposed to the base frame 100 through the spring 31 away from the end far from the actuator 200, and thereby applying a engagement force to the clutch assembly through the elastic force generated by the compression or stretching of the spring 31.

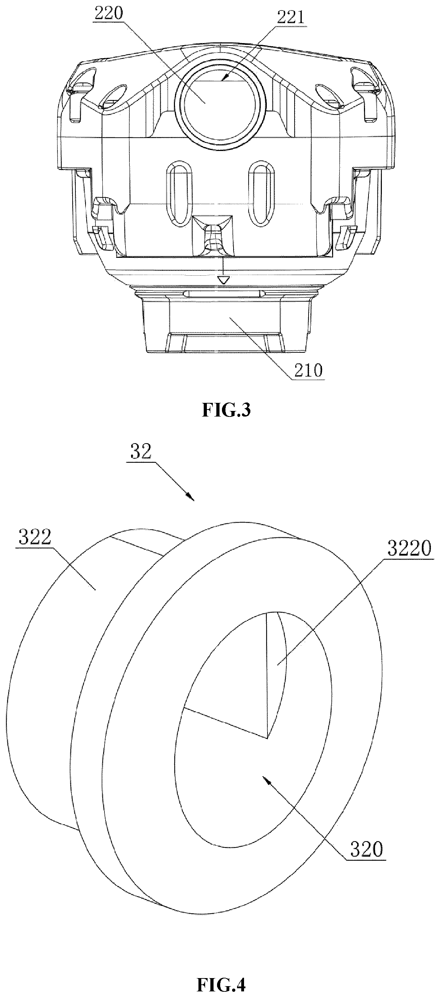

In the embodiment, as shown in FIG. 3 to FIG. 6, the adjusting buffer block 32 slides and fits with the output shaft 220 through a connecting hole 320. The guiding structure includes a guide groove 221 extending axially along the side of the output shaft 220, and a guide block 3220 set on the side wall of the connecting hole 320. The guide block 3220 slides and fits with the guide groove 221 axially, and is also limitedly fitted along the circumferential direction.

It should be understood that the guide groove 221 can also be set on the side of the connecting hole 320, and the guide block 3220 is correspondingly set on the side of the output shaft 220. Moreover, there may be a plurality of guide grooves 221 and/or guide blocks 3220, wherein the number of guide grooves 221 and guide blocks 3220 can be one-to-one corresponding or multiple depending on the specific structure or actual needs of the guide groove 221 and guide block 3220, and the specific number can be chosen by those skilled in the art. For the convenience of describing the content later, in this embodiment, the guide groove 221 is preferably set on the side of the output shaft 220, and the guide block 3220 is set on the side of the connecting hole 320.

Specifically, there are various specific structures of the guide groove 221 and the guide block 3220, including but not limited to the following two types.

Structure 1: As shown in FIG. 3 to FIG. 6, a plane is machined along the axis on the side of the output shaft 220 by processes such as cutting and grinding, and the plane can form the required guide groove 221 relative to the output shaft 220. At the same time, while machining the connecting hole 320, a plane extending along the axis can be left on the side of the connecting hole 320, and the plane can form the required guiding block 3220 relative to the connecting hole 320. Therefore, when installing the adjusting buffer block 32, the adjusting buffer block 32 can be inserted over the output shaft 220 through the connecting hole 320, and then the side plane of the output shaft 220 can match with the side plane of the connecting hole 320 to make the adjusting buffer block 32 only axially movable relative to the output shaft 220.

It can be understood that the planes forming the guide groove 221 and the guide block 3220 can be horizontal planes, arc-shaped planes, or other shaped planes, as long as the adjusting buffer block 32 and the output shaft 220 cannot rotate relative to each other in the circumferential direction.

Structure 2: The guide groove 221 can be a spline groove set on the side of the output shaft 220, and the guiding block 3220 can be a spline set on the inner side of the connecting hole 320. Thus, the adjusting buffer block 32 can be spline-connected to the output shaft 220.

One embodiment of this disclosure, as shown in FIG. 4, the end face of the adjusting buffer block 32 is flat, and the adjusting buffer block 32 can form part of the clutch assembly with by engagement of the base frame 100 through frictional force with the end face. When the adjusting buffer block 32 is installed, the adjusting buffer block 32 can be pressed against the inner wall of the base frame 100 in the axial direction opposite to the end face under the spring force of the spring 31. At this time, the spring force of the spring 31 acting on the adjusting buffer block 32 can be converted into positive pressure between the end face of the adjusting buffer block 32 and the base frame 100. Then, the adjusting buffer block 32 is engaged with the inner wall of the base frame 100 in the circumferential direction through the frictional force formed by the positive pressure.

Thus, when adjusting the angle of the electrically adjustable rear-view element, the driving force of the actuator 200 needs to be smaller than the frictional force between the end face of the adjusting buffer block 32 and the inner wall of the base frame 100 along the circumferential direction, to ensure that the output shaft 220 and the base frame 100 are in frictional engagement for synchronous movement. Thereby, the actuator 200 can drive the rear-view element to rotate with the rotation of the output shaft 220 to achieve angle adjustment. When adjusting the angle of the rear-view element manually, the pressing force manually applied to the base frame 100 needs to be greater than the frictional force between the end face of the adjusting buffer block 32 and the inner wall of the base frame 100 along the circumferential direction, and the pressing force applied to the base frame 100 also needs to be smaller than the self-locking force between the output shaft 220 and the actuator 200, to ensure that the base frame 100 can drive the rear-view element to rotate while the output shaft 220 can remain relatively stationary with the actuator 200.

In this embodiment, as shown in FIG. 4, a positioning sleeve 333 is also set on the side wall of the base frame 100 where the adjusting buffer block 32 is set. Thus, the adjusting buffer block 32 can be positioned and matched with the positioning sleeve 333 through the connecting hole 320 in the middle to ensure the structural stability when the adjusting buffer block 32 is friction matched with the base frame 100.

In this embodiment, as shown in FIG. 4, FIG. 7, FIG. 10, and FIG. 11, the clutch assembly 3 further includes a base frame buffer block 33. The base frame buffer block 33 can be detachably installed at the corresponding position of the base frame 100 through fasteners. The positioning sleeve 333 is located in the middle of the end face of the adjusting buffer block 32 directly opposite the base frame buffer block 33. Thus, during the installation of clutch assembly 3, the base frame buffer block 33 can be supported and matched with the adjusting buffer block 32 through the positioning sleeve 333; Moreover, under the elastic force of spring 31, the adjusting buffer block 32 can achieve a friction match between the end face and the end face of base frame buffer block 33, thereby forming the required clutch assembly.

It should be understood that due to the thin thickness of the base frame 100, the friction performance may not necessarily meet the needs of the clutch assembly. Therefore, by installing the additional base frame buffer block 33 for friction match with the adjusting buffer block 32, and setting the performance of the base frame buffer block 33, it can be ensured that the match between the base frame buffer block 33 and the adjusting buffer block 32 meets the needs of the clutch assembly.

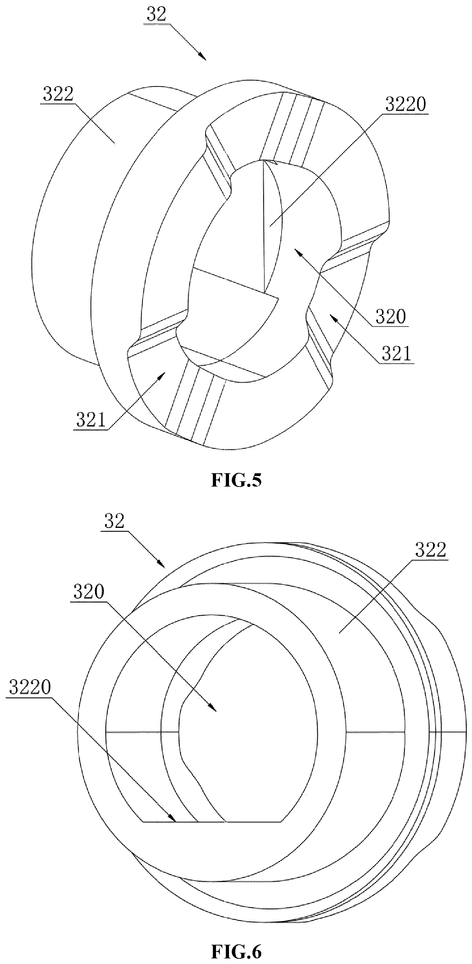

In another embodiment of the present disclosure, as shown in FIG. 5, FIG. 8, FIG. 9 to FIG. 12, the clutch assembly includes a clutch groove 321 set on the end face of the adjusting buffer block 32 and a clutch block 331 set on the base frame 100. When installing the adjusting buffer block 32, the adjusting buffer block 32 can be axially engaged with the end face of the clutch block 331 through the end face of the clutch groove 321 under the spring force of the spring 31, so that the clutch groove 321 and the clutch block 331 can be engaged along the circumferential direction through the inclined surface under the action of the spring force.

Therefore, when adjusting the angle of the electrically adjustable rear-view element, the driving force of the actuator 200 needs to be less than the engagement force of the clutch groove 321 and the clutch block 331 along the circumferential direction, so as to ensure that the output shaft 220 and the base frame 100 maintain synchronous movement through the engagement of the clutch groove 321 and the clutch block 331, such that the actuator 200 can drive the rear-view element to rotate with the output shaft 220 to achieve angle adjustment. When manually adjusting the angle of the rear-view element, the pressing force applied to the base frame 100 needs to be greater than the engagement force of the clutch groove 321 and the clutch block 331, and at the same time, the pressing force applied to the base frame 100 needs to be less than the self-locking force of the output shaft 220 and the actuator 200.

It should be understood that the positions of the clutch groove 321 and the clutch block 331 can be interchanged, that is, the clutch groove 321 is set on the base frame 100 and the clutch block 331 is set on the adjusting buffer block 32. For the convenience of describing the subsequent content, the clutch groove 321 is set on the adjusting buffer block 32 and the clutch block 331 on the base frame 100. But other positions are possible.

The specific shape of the clutch groove 321 and the clutch block 331 is not specifically limited as long as the stable engagement between the clutch groove 321 and the clutch block 331 can be achieved through an inclined surface in the circumferential direction. Moreover, the inclined surface of the clutch groove 321 and the clutch block 331 in the circumferential direction can be an arc surface, a flat surface, or other shaped surface, as long as the above requirements of the clutch assembly are met.

At the same time, the specific number of settings for the clutch groove 321 and the clutch block 331 can be selected by those skilled in the art according to actual needs. It can be one corresponding unit or multiple corresponding units.

In this embodiment, as shown in FIG. 5, FIG. 8, and FIG. 9, the base frame 100 is provided with a side wall of the clutch block 331 and a positioning sleeve 333. The clutch block 331 is located on the side of the positioning sleeve 333. Thus, the adjusting buffer block 32 can be positioned and matched with the positioning sleeve 333 through the connecting hole 320, ensuring the stability of the mating structure of the clutch groove 321 and the clutch block 331.

It should be understood that during the installation of the clutch assembly 3, the adjusting buffer block 32 is generally first fitted to the output shaft 220, and then installed together with the actuator 200 within the base frame 100. Therefore, it is generally inconvenient to provide a positioning structure for the adjusting buffer block 32 at the corresponding position of the base frame 100, which leads to the unstable structure of the adjusting buffer block 32 when it is cooperated with the clutch block 331 on the base frame 100 through the clutch groove 321, which in turn can easily affect the normal use of the clutch assembly. Therefore, by matching the positioning sleeve 333 on the base frame 100 with the connecting hole 320 of the adjusting buffer block 32, the adjusting buffer block 32 can be supported while effectively reducing or avoiding the jumping of the adjusting buffer block 32 when it rotates in the circumferential direction.

In the embodiment, as shown in FIG. 5 and FIG. 6, the adjusting buffer block 32 is not provided with a clutch groove 321, but an extension 322 is set on the end face of the adjusting buffer block 32. The connecting hole 320 of the adjusting buffer block 32 passes through the extension 322, and the guide block 3220 is set on the side wall of the corresponding connecting hole 320 of the extension 322. Therefore, when the adjusting buffer block 32 is matched with the positioning sleeve 333 through the connecting hole 320, it can avoid interference between the guide block 3220 and the positioning sleeve 333.

In this embodiment, there are multiple ways to set the clutch block 331, including but not limited to the following two methods.

Setting method one: The clutch block 331 and the base frame 100 are integrally formed.

Setting method two: Fabricate the clutch block 331 separately, and fix the clutch block 331 at the corresponding position of the base frame 100.

It should be understood that due to the relatively complex structure of the clutch block 331, if it is directly integrated with the base frame 100, the complexity of the molding process of the base frame 100 will be increased, which in turn will lead to an increase in production efficiency and production costs. Therefore, in this embodiment, the preferred setting method for the clutch block 331 is to use the above setting method two.

Specifically, as shown in FIG. 2, FIG. 8, FIG. 9, FIG. 11, FIG. 12, and FIG. 14, the clutch assembly 3 further comprises the base frame buffer block 33. The base frame buffer block 33 can be detachably installed at the corresponding position of the base frame 100 by fasteners. The positioning sleeve 333 is arranged in the middle of one end face of the base frame buffer block 33, and the clutch block 331 is located on the side of the same end face of the positioning sleeve 333. Therefore, during the installation of the clutch assembly 3, the base frame buffer block 33 can be supported and matched with the adjusting buffer block 32 through the positioning sleeve 333, and under the action of the spring 31, the adjusting buffer block 32 can be engaged with the base frame buffer block 33 that is provided with the clutch block 331 by setting an end face with a clutch groove 321, thus forming the required clutch assembly.

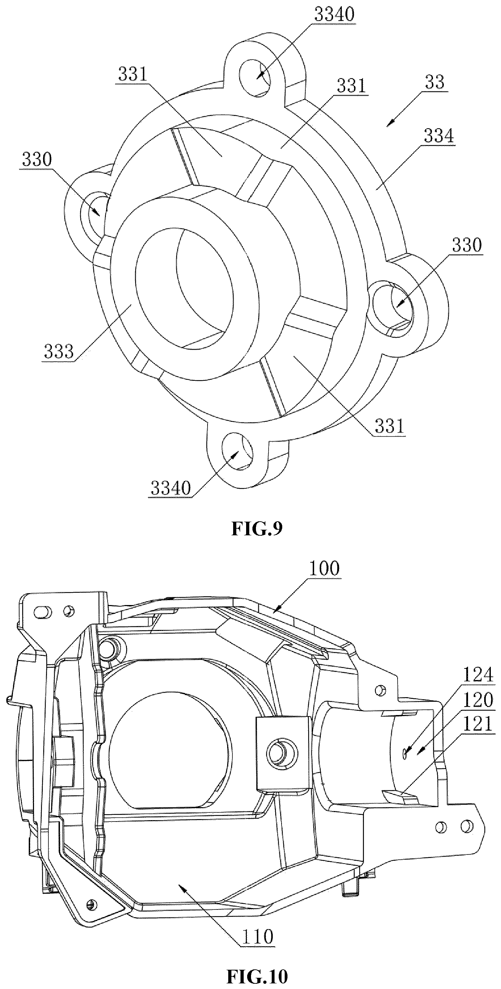

The present disclosure, as shown in FIG. 10 to FIG. 14, includes the base frame 100 with interconnected first installation area 110 and second installation area 120. The actuator 200 is installed in the first installation area 110 and its output shaft 220 extends to the second installation area 120. The clutch assembly 3 is installed in the second installation area 120, and the base frame buffer block 33 is matched with the second installation area 120 through a positioning structure.

In this embodiment, the actuator 200 can form an actuator buffer assembly through assembly with the base frame 100 via the clutch assembly 3. There are multiple specific installation methods for the actuator buffer assembly, in general, the actuator buffer assembly mainly includes the following two installation methods.

Installation method 1: The base frame 100 is arranged at the end of the second installation area 120 away from the first installation area 11.; The installation process of clutch assembly 3 on the base frame 100 is as follows: first, install the clutch assembly 3 on the output shaft 220 of the actuator 200, and then install the actuator 200 together with the clutch assembly 3 in the corresponding first installation area 110 and the second installation area 120 of the base frame 100.

It should be noted that when the actuator buffer assembly is installed in the above manner, it can ensure that the spring 31 has better consistency of damping force, and thus the spring 31 is not easy to deviate or loosen during use; but the overall coaxiality of the clutch assembly 3 is slightly worse, and the installation of the entire assembly is not convenient.

Specifically, as shown in FIG. 6, FIG. 7, FIG. 10, FIG. 11, and FIG. 12, when assembling the clutch assembly 3, first install the spring 31 on the output shaft 220. Then, slide the adjusting buffer block 32 onto the output shaft 220, align the guide groove 221 with the guide block 3220, and finally, insert the base frame buffer block 33 into the connecting hole 320 of the adjusting buffer block 32 via the positioning sleeve 333.

The middle of the base frame buffer block 33 is provided with a second installation hole 330, and the side wall in the middle of the second installation area 120 of the base frame 100 away from the first installation area 110 is provided with a first installation hole 124. After the clutch assembly 3 is assembled, the actuator 200, which is installed with the clutch assembly 3, is first installed in the base frame 100, wherein the actuator 200 is located in the first installation area 110, and the clutch assembly 3 is all located in the second installation area 120. Then, the actuator 200 is connected by fastening means passing through the first installation hole 124 on the outer side of the second installation area 120 and the second installation hole 330 in the middle of base frame buffer block 33.

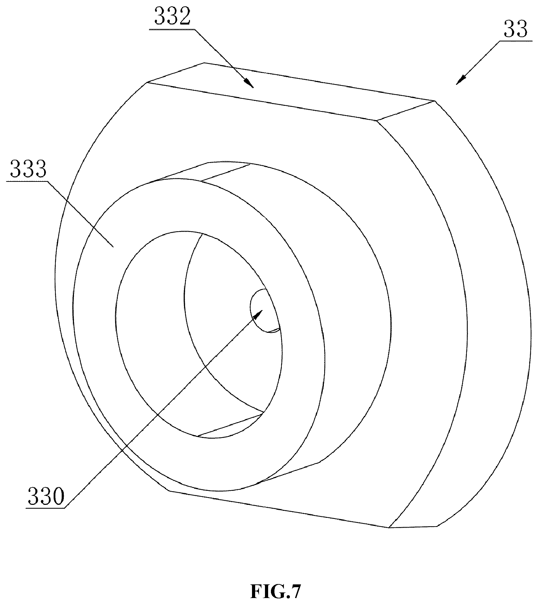

For the installation method one, as shown in FIG. 7, FIG. 8, FIG. 10 and FIG. 11, the positioning structure includes at least one horizontal limiting surface 332 set on the side of the base frame buffer block 33, and at least one horizontal positioning surface set on the side of the second installation area 120. The base frame buffer block 33 can be fitted with the positioning surface through the limiting surface 332 to ensure the structural stability of base frame buffer block 33.

It should be understood that the connection accuracy of the fasteners is generally low, so the fasteners only need to ensure the connection between the base frame buffer block 33 and the base frame 100 in the axial direction. The positioning accuracy of the base frame buffer block 33 can be effectively improved by the fitting of the positioning surface and the limit surface 332 in the circumferential direction, which can further improve the structural stability of the clutch assembly 3 during operation. The specific number of limiting surfaces 332 and positioning surfaces can be selected by those skilled in the art according to actual needs. For example, as shown in FIG. 6 and FIG. 9, the number of limiting surfaces 332 and positioning surface are both two, and the two limiting surfaces 332 and two positioning surfaces are symmetrically arranged.

Specifically, as shown in FIG. 7, FIG. 8 and FIG. 10, the base frame buffer block 33 is a disc-shaped structure. Symmetrical horizontal planes parallel to the axis can be processed on the side of the base frame buffer block 33 through processing such as washing and grinding, and the two horizontal planes are the limiting surfaces 332. During the injection molding of the base frame 100, the positioning block 121 can be formed on both side walls symmetrically in the second installation area 120. Both end faces of the positioning block 121 are horizontal surfaces, forming the required positioning surface.

Installation method 2: Install the installation sleeve 122 in the second installation area 120 of the base frame 100 away from the end of the first installation area 110, and the installation sleeve 122 is connected to the second installation area 120. The installation process of the clutch assembly 3 on the base frame 100 is as follows: First, install the actuator 200 on the base frame 100, and then install the clutch assembly 3 along the installation sleeve 122 on the output shaft 220.

It should be noted that when the actuator buffer assembly is installed using the above installation method 2, it can be ensured that the clutch assembly 3 is overall coaxial and the installation of the entire assembly is also relatively convenient. However, the damping consistency of the spring 31 is slightly poor. Both of the above installation methods can meet the daily practical use of the vehicle, and those skilled in the art can choose a suitable installation method base on the focus of actual use.

Specifically, as shown in FIG. 9, FIG. 13, and FIG. 14, when assembling the actuator 200, the actuator 200 can be rotatably installed in the first installation area 110, and the output shaft 220 of the actuator 200 can extend to the second installation area 120, and the axis of the output shaft 220 is aligned with the axis of the installation sleeve 122.

A pair of symmetric second installation holes 330 are arranged on the outer side of the base frame buffer block 33, and a pair of first installation holes 124 are symmetrically arranged on the outer side of the installation sleeve 122. After the actuator 200 is installed, the spring 31 can be first fitted onto the output shaft 220 of the actuator 200 along the opening of the installation sleeve 122. Then, the adjusting buffer block 32 is also slidably installed along the opening of the installation sleeve 122 onto the output shaft 220, and the guide groove 221 is aligned and matched with the guide block 3220. Finally, the base frame buffer block 33 is inserted into the connecting hole 320 of the adjusting buffer block 32 by means of the positioning sleeve 333, and the second installation hole 330 of the base frame buffer block 33 is aligned with the first installation hole 124 of the installation sleeve 122, and then a pair of fasteners are respectively passed through the corresponding second installation hole 330 and the first installation hole 124 for fastening connection.

It should be understood that the base frame buffer block 33 is generally a disc structure. In order to facilitate the setting of the second installation hole 330, a cover plate 334 can be set on the end face of the base frame buffer block 33 where no clutch block 331 is set. The size of the cover plate 334 is larger than the opening size of the installation sleeve 122, so the second installation hole 330 can be set on the side of the cover plate 334 to ensure that the cover plate 334 can be secured to the installation sleeve 122 by fasteners in the axial direction, thereby ensuring the axial stability of the base frame buffer block 33.

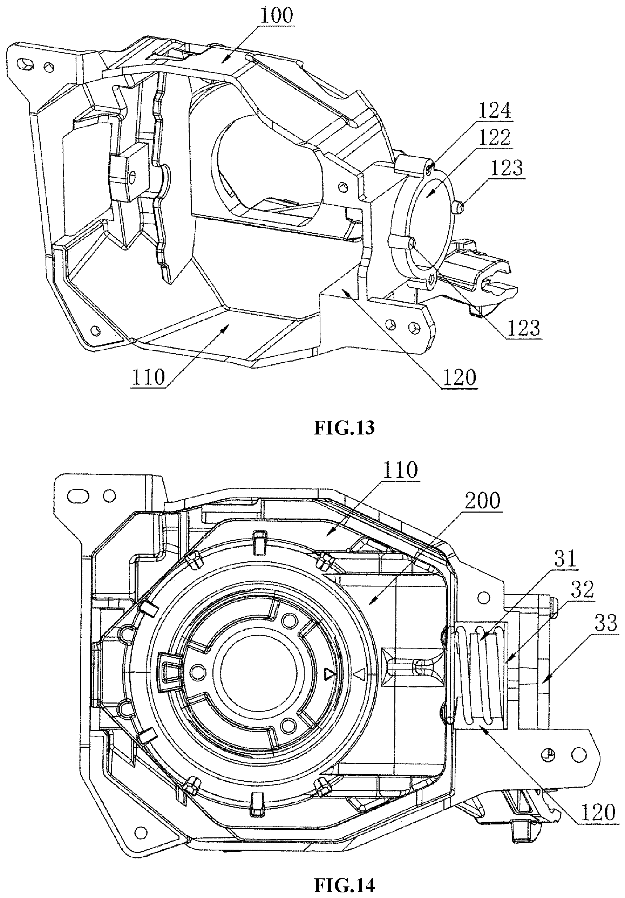

For the second installation method, as shown in FIG. 9 and FIG. 13, the positioning structure includes a pair of positioning columns 123, which are spaced apart from the outer side of the installation sleeve 122, and a pair of positioning holes 3340, which are spaced apart from the side of the base frame buffer block 33. Therefore, the base frame buffer block 33 can be positioned and coordinated with the positioning column 123 through the positioning hole 3340, ensuring the stability of the structural circle of the base frame buffer block 33.

Another aspect of the present disclosure provides a rear-view device , wherein a preferred embodiment includes an actuator 200 and a base frame 100, and the actuator 200 and the base frame 100 can be matched with the actuator buffer structure described above.

Another aspect of the present disclosure provides a vehicle, wherein a preferred embodiment comprises the above rear-view device .

The above describes the basic principle, main characteristics and advantages of the present disclosure. Those skilled in the art should understand that the present disclosure is not limited by the foregoing embodiments. The foregoing embodiments and the description in the specification only illustrate the principles of the present disclosure. The claimed scope of the present disclosure is defined by the appended claims and their equivalents.

### Reference Signs

- 3: clutch assembly
- 31: spring
- 32: adjusting buffer block
- 33: base frame buffer block
- 100: base frame
- 110: first installation area
- 120: second installation area
- 121: positioning block
- 122: installation sleeve
- 123: positioning column
- 124: first installation hole
- 200: actuator
- 210: installation section
- 220: output shaft
- 221: guide groove
- 320: connecting hole
- 321: clutch groove
- 322: extension
- 330: second installation hole
- 331: clutch block
- 332: limiting surface
- 333: positioning sleeve
- 334: cover plate
- 3220: guiding block
- 3340: positioning hole

## Claims

1. An actuator buffer structure, comprising
• a base frame (100) for installing a rear-view element;
• an actuator (200) fixedly installed and rotatably connected to the base frame (100); and
• a clutch assembly (3) for connecting an output shaft (220) of the actuator (200) to the base frame (100), wherein
o the actuator (200) is suitable for driving the output shaft (220) to rotate the base frame (100) together with the rear-view element around an axis via the clutch assembly (3), and
o the base frame (100) is capable of disengaging from the output shaft (220) via the clutch assembly (3) under external force,
so that the base frame (100) rotates together with the rear-view element relative to the output shaft (220) via the actuator (200),
**characterized in that** the clutch assembly (3) comprises an adjusting buffer block (32) axially slidably installed on the output shaft (220) and a base frame buffer block (33), wherein a clutch groove (321) set on the end face of the adjusting buffer block (32) and a clutch block (331) set on the base frame (100) engage with each other in the circumferential direction, and
the base frame (100) is provided with interconnected first installation area (110) and second installation area (120), wherein
• the actuator (200) is installed in the first installation area (110) and its output shaft (220) extends to the second installation area (120),
• the clutch assembly (3) is installed in the second installation area (120), and
• the base frame buffer block (33) is matched with the second installation area (120) through a positioning structure (121).

2. The actuator buffer structure according to claim 1, **characterized in that**
• the adjusting buffer block (32) is adapted to be axially elastically connected to the actuator (200) or the base frame (100), and
• the cooperation between the adjusting buffer block (32) and the base frame (100) is achieved via the clutch assembly.

3. The actuator buffer structure according to claim 2, **characterized in that**,
when the actuator (200) is started, the adjusting buffer block (32) remains engaged with the base frame (100) in the circumferential direction under the action of elasticity via the clutch assembly; and,
when the base frame (100) is driven by external force, the adjusting buffer block (32) disengages from the base frame (100) in the circumferential direction via the clutch assembly.

4. The actuator buffer structure according to claim 2 or 3, **characterized in that**
the adjusting buffer block (32) cooperates with the output shaft (220) via a connecting hole;
the output shaft (220) has a guide groove (221) along the axial extension (322) on the side; and
the side wall of the connecting hole (320) has a guide block (3220), wherein
the guide block (3220) and the guide groove (221) slide along the axial direction and are limitedly matched along the circumferential direction.

5. The actuator buffer structure according to any one of the claims 2 to 4, **characterized in that**
the adjusting buffer block (32) forms part of the clutch assembly by circumferential frictional engagement with the base frame (100) through an end face.

6. The actuator buffer structure according to claim 5, **characterized in that**,
when the actuator (200) is started, the driving force of the actuator (200) is less than the friction force between the end face of the adjusting buffer block (32) and the base frame (100) in the circumferential direction, and,
when the base frame (100) is driven by external force, the pressing force received by the base frame (100) is greater than the friction force but less than the self-locking force of the output shaft (220).

7. The actuator buffer structure according to any one of the preceding claims, **characterized in that**,
when the actuator (200) is started, the driving force of the actuator (200) is less than the engagement force between the clutch groove (321) and clutch block (331) in the circumferential direction; and,
when driving the base frame (100) by external force, the pressing force applied to the base frame (100) is greater than the engagement force and less than the self-locking force of the output shaft (220).

8. The actuator buffer structure according to any one of the preceding claims, **characterized in that**
the base frame buffer block (33) is detachably installed on the base frame (100),
the base frame buffer block (33) is adapted to axially slidably cooperate with the connecting hole (320) of the adjusting buffer block (32) via a positioning sleeve (333) provided at the center; and
the clutch block (331) is arranged on the end face of the base frame buffer block (33) so as to form the clutch assembly between the adjusting buffer block (32) and the base frame buffer block (33) .

9. The actuator buffer structure according to claim 8, **characterized in that**
the clutch assembly (3) is adapted to be first installed on the output shaft (220), and then the actuator (200) and the clutch assembly (3) are installed on the base frame (100); and
the base frame buffer block (33) is connected to the side wall of the second installation area (120) via fasteners in the middle.

10. The actuator buffer structure according to claim 8 or 9, **characterized in that**
the positioning structure includes at least one horizontal limiting surface (332) set on the side of base frame buffer block (33), and at least one horizontal positioning surface set on the side of the second installation area (120);
wherein preferably the base frame buffer block (33) is suitable for being closely attached to the positioning surface through the limiting surface (332).

11. The actuator buffer structure according to any one of the claims 8 to 10, **characterized in that**
an installation sleeve (122) penetrating through the base frame (100) is provided at the end of the second installation area (120), wherein
the axis of the output shaft (220) is aligned with the axis of the installation sleeve (122).

12. The actuator buffer structure according to claim 11, **characterized in that**
the actuator (200) is first installed on the base frame (100) and then the clutch assembly (3) is installed along the installation sleeve (122) on the output shaft (220);
the base frame buffer block (33) is fixed on the exterior of the installation sleeve (122) by a pair of symmetrical fasteners;
the positioning structure comprises a pair of positioning columns (123) spaced apart from the outer side of the installation sleeve (122), and a pair of positioning holes (3340) spaced apart from the side of the base frame buffer block (33); and/or
the base frame buffer block (33) is suitable for being positioned and matched with the positioning columns (123) through the positioning holes (3340).

13. A rear-view device, comprising the actuator buffer structure according to any one of the preceding claims.

14. The rear-view device according to claim 13, **characterized in that**
the rear-view element comprises a mirror and/or camera.

15. A vehicle, **characterized in that** comprising the rear-view device according to claim 13 or 14.

## Patentansprüche

1. Aktuatorpufferstruktur, umfassend:
• einen Basisrahmen (100) zum Installieren eines Rückblickelements;
• einen Aktuator (200), der fest installiert und drehbar mit dem Basisrahmen (100) verbunden ist; und
• eine Kupplungsanordnung (3) zum Verbinden einer Ausgangswelle (220) des Aktuators (200) mit dem Basisrahmen (100), wobei
o der Aktuator (200) zum Antreiben der Ausgangswelle (220) geeignet ist, um über die Kupplungsanordnung (3) den Basisrahmen (100) zusammen mit dem Rückblickelement um eine Achse zu drehen, und
o der Basisrahmen (100) in der Lage ist, sich unter externer Kraft über die Kupplungsanordnung (3) von der Ausgangswelle (220) zu lösen,
sodass sich der Basisrahmen (100) zusammen mit dem Rückblickelement über den Aktuator (200) relativ zur Ausgangswelle (220) dreht,
**dadurch gekennzeichnet, dass** die Kupplungsanordnung (3) einen Einstellpufferblock (32), der axial verschiebbar an der Ausgangswelle (220) installiert ist, und einen Basisrahmenpufferblock (33) umfasst, wobei sich eine an der Stirnfläche des Einstellpufferblocks (32) ausgebildete Kupplungsnut (321) und ein am Basisrahmen (100) ausgebildeter Kupplungsblock (331) in der Umfangsrichtung miteinander im Eingriff befinden, und
der Basisrahmen (100) mit einem ersten Installationsbereich (110) und einem zweiten Installationsbereich (120), die miteinander verbunden sind, versehen ist, wobei
• der Aktuator (200) im ersten Installationsbereich (110) installiert ist und sich seine Ausgangswelle (220) zum zweiten Installationsbereich (120) erstreckt,
• die Kupplungsanordnung (3) im zweiten Installationsbereich (120) installiert ist, und
• der Basisrahmenpufferblock (33) über eine Positionierstruktur (121) an den zweiten Installationsbereich (120) angepasst ist.

2. Aktuatorpufferstruktur nach Anspruch 1, **dadurch gekennzeichnet, dass**
• der Einstellpufferblock (32) dazu ausgelegt ist, axial elastisch mit dem Aktuator (200) oder dem Basisrahmen (100) verbunden zu sein, und
• das Zusammenwirken zwischen dem Einstellpufferblock (32) und dem Basisrahmen (100) über die Kupplungsanordnung erreicht wird.

3. Aktuatorpufferstruktur nach Anspruch 2, **dadurch gekennzeichnet, dass**
wenn der Aktuator (200) gestartet wird, der Einstellpufferblock (32) unter der Wirkung von Elastizität über die Kupplungsanordnung in der Umfangsrichtung mit dem Basisrahmen (100) im Eingriff bleibt; und
wenn der Basisrahmen (100) von einer externen Kraft angetrieben wird, sich der Einstellpufferblock (32) über die Kupplungsanordnung in der Umfangsrichtung von dem Basisrahmen (100) löst.

4. Aktuatorpufferstruktur nach Anspruch 2 oder 3, **dadurch gekennzeichnet, dass**
der Einstellpufferblock (32) über ein Verbindungsloch mit der Ausgangswelle (220) zusammenwirkt;
die Ausgangswelle (220) entlang der axialen Ausdehnung (322) auf der Seite eine Führungsnut (221) aufweist; und
die Seitenwand des Verbindungslochs (320) einen Führungsblock (3220) aufweist, wobei
der Führungsblock (3220) und die Führungsnut (221) entlang der axialen Richtung gleiten und entlang der Umfangsrichtung begrenzt angepasst sind.

5. Aktuatorpufferstruktur nach einem der Ansprüche 2 bis 4, **dadurch gekennzeichnet, dass**
der Einstellpufferblock (32) durch reibschlüssiges Eingreifen mit dem Basisrahmen (100) über eine Stirnfläche entlang des Umfangs einen Teil der Kupplungsanordnung ausbildet.

6. Aktuatorpufferstruktur nach Anspruch 5, **dadurch gekennzeichnet, dass**
wenn der Aktuator (200) gestartet ist, die Antriebskraft des Aktuators (200) in der Umfangsrichtung geringer als die Reibungskraft zwischen der Stirnfläche des Einstellpufferblocks (32) und dem Basisrahmen (100) ist, und
wenn der Basisrahmen (100) von einer externen Kraft angetrieben wird, die von dem Basisrahmen (100) empfangene Presskraft größer als die Reibungskraft, aber geringer als die Selbstverriegelungskraft der Ausgangswelle (220) ist.

7. Aktuatorpufferstruktur nach einem der vorangehenden Ansprüche, **dadurch gekennzeichnet, dass**
wenn der Aktuator (200) gestartet ist, die Antriebskraft des Aktuators (200) geringer als die Eingriffskraft zwischen der Kupplungsnut (321) und dem Kupplungsblock (331) in der Umfangsrichtung ist, und
wenn der Basisrahmen (100) von einer externen Kraft angetrieben wird, die auf den Basisrahmen (100) angewendete Presskraft größer als die Eingriffskraft und geringer als die Selbstverriegelungskraft der Ausgangswelle (220) ist.

8. Aktuatorpufferstruktur nach einem der vorangehenden Ansprüche, **dadurch gekennzeichnet, dass**
der Basisrahmenpufferblock (33) lösbar am Basisrahmen (100) installiert ist,
der Basisrahmenpufferblock (33) dazu ausgelegt ist, über eine im Zentrum bereitgestellte Positionierhülse (333) axial verschiebbar mit dem Verbindungsloch (320) des Einstellpufferblocks (32) zusammenzuwirken; und
der Kupplungsblock (331) an der Stirnfläche des Basisrahmenpufferblocks (33) angeordnet ist, um zwischen dem Einstellpufferblock (32) und dem Basisrahmenpufferblock (33) die Kupplungsanordnung auszubilden.

9. Aktuatorpufferstruktur nach Anspruch 8, **dadurch gekennzeichnet, dass**
die Kupplungsanordnung (3) dazu ausgelegt ist, zuerst an der Ausgangswelle (220) installiert zu werden und dann der Aktuator (200) und die Kupplungsanordnung (3) am Basisrahmen (100) installiert werden; und
der Basisrahmenpufferblock (33) über Befestigungselemente in der Mitte mit der Seitenwand des zweiten Installationsbereichs (120) verbunden ist.

10. Aktuatorpufferstruktur nach Anspruch 8 oder 9, **dadurch gekennzeichnet, dass**
die Positionierstruktur mindestens eine horizontale Begrenzungsfläche (332), ausgebildet auf der Seite des Basisrahmenpufferblocks (33), und mindestens eine horizontale Positionierfläche, ausgebildet auf der Seite des zweiten Installationsbereichs (120), umfasst;
wobei der Basisrahmenpufferblock (33) vorzugsweise dazu geeignet ist, durch die Begrenzungsfläche (332) dicht an der Positionierfläche angebracht zu sein.

11. Aktuatorpufferstruktur nach einem der Ansprüche 8 bis 10, **dadurch gekennzeichnet, dass**
eine durch den Basisrahmen (100) hindurch verlaufende Installationshülse (122) am Ende des zweiten Installationsbereichs (120) bereitgestellt ist, wobei
die Achse der Ausgangswelle (220) auf die Achse der Installationshülse (122) ausgerichtet ist.

12. Aktuatorpufferstruktur nach Anspruch 11, **dadurch gekennzeichnet, dass**
der Aktuator (200) zuerst am Basisrahmen (100) installiert wird und dann die Kupplungsanordnung (3) entlang der Installationshülse (122) an der Ausgangswelle (220) installiert wird;
der Basisrahmenpufferblock (33) durch ein Paar symmetrischer Befestigungselemente an der Außenseite der Installationshülse (122) befestigt ist;
die Positionierstruktur ein Paar Positionierstützen (123), von der Außenseite der Installationshülse (122) beabstandet, und ein Paar Positionierlöcher (3340), von der Seite des Basisrahmenpufferblocks (33) beabstandet, umfasst; und/oder
der Basisrahmenpufferblock (33) dazu geeignet ist, durch die Positionierlöcher (3340) relativ zu den Positionierstützen (123) angeordnet und angepasst zu werden.

13. Rückblickvorrichtung, umfassend die Aktuatorpufferstruktur nach einem der vorangehenden Ansprüche.

14. Rückblickvorrichtung nach Anspruch 13, **dadurch gekennzeichnet dass**
das Rückblickelement einen Spiegel und/oder eine Kamera umfasst.

15. Fahrzeug, **dadurch gekennzeichnet, dass** es die Rückblickvorrichtung nach Anspruch 13 oder 14 umfasst.

## Revendications

1. Structure de tampon d'actionneur, comprenant
• un cadre de base (100) pour installer un élément de rétroviseur ;
• un actionneur (200) monté de manière fixe et raccordé de manière rotative au cadre de base (100) ; et
• un ensemble d'embrayage (3) pour le raccordement d'un arbre de sortie (220) de l'actionneur (200) au cadre de base (100), où
o l'actionneur (200) est apte pour entraîner l'arbre de sortie (220) afin de faire tourner le cadre de base (100) avec l'élément de rétroviseur autour d'un axe par l'intermédiaire de l'ensemble d'embrayage (3), et
o le cadre de base (100) est apte à se déclencher de l'arbre de sortie (220) par l'intermédiaire de l'ensemble d'embrayage (3) sous l'effet d'une force extérieure,
de sorte que le cadre de base (100) est rotatif avec l'élément de rétroviseur par rapport à l'arbre de sortie (220) par l'intermédiaire de l'actionneur (200),
**caractérisée en ce que** l'ensemble d'embrayage (3) comprend un bloc de tampon d'ajustement (32) monté axialement de manière coulissante sur l'arbre de sortie (220) et un bloc de tampon de cadre de base (33), une rainure d'embrayage (321) présentée sur la face d'extrémité du bloc de tampon d'ajustement (32) et un bloc d'embrayage (331) présenté sur le cadre de base (100) étant en prise l'un avec l'autre dans la direction circonférentielle, et
le cadre de base (100) est pourvu d'une première surface de montage (110) et d'une deuxième surface de montage (120) interconnectées, où
• l'actionneur (200) est monté dans la première surface de montage (110) et son arbre de sortie (220) s'étend jusqu'à la deuxième surface de montage (120),
• l'ensemble d'embrayage (3) est monté dans la deuxième surface de montage (120), et
• le bloc de tampon de cadre de base (33) correspond à la deuxième surface de montage (120) par une structure de positionnement (121).

2. Structure de tampon d'actionneur selon la revendication 1, **caractérisée en ce que**
• le bloc de tampon d'ajustement (32) est adapté pour être raccordé axialement de manière élastique à l'actionneur (200) ou au cadre de base (100), et
• la coopération entre le bloc de tampon d'ajustement (32) et le cadre de base (100) est obtenue par l'intermédiaire de l'ensemble d'embrayage.

3. Structure de tampon d'actionneur selon la revendication 2, **caractérisée en ce que**,
lorsque l'actionneur (200) est démarré, le bloc de tampon d'ajustement (32) reste en prise avec le cadre de base (100) dans la direction circonférentielle sous l'effet de l'élasticité par l'intermédiaire de l'ensemble d'embrayage ; et,
lorsque le cadre de base (100) est entraîné par une force extérieure, le bloc de tampon d'ajustement (32) se déclenche du cadre de base (100) dans la direction circonférentielle par l'intermédiaire de l'ensemble d'embrayage.

4. Structure de tampon d'actionneur selon la revendication 2 ou la revendication 3, **caractérisée en ce que**
le bloc de tampon d'ajustement (32) coopère avec l'arbre de sortie (220) par l'intermédiaire d'un trou de connexion ;
l'arbre de sortie (220) présente une rainure de guidage (221) sur le côté le long de l'extension axiale (322) ; et
la paroi latérale du trou de connexion (320) présente un bloc de guidage (3220), où
le bloc de guidage (3220) et la rainure de guidage (221) coulissent dans la direction axiale et correspondent de manière limitée dans la direction circonférentielle.

5. Structure de tampon d'actionneur selon l'une des revendications 2 à 4, **caractérisée en ce que** le bloc de tampon d'ajustement (32) forme une partie de l'ensemble d'embrayage par prise par friction circonférentielle avec le cadre de base (100) par une face d'extrémité.

6. Structure de tampon d'actionneur selon la revendication 5, **caractérisée en ce que**,
lorsque l'actionneur (200) est démarré, la force d'entraînement de l'actionneur (200) est inférieure à la force de friction entre la face d'extrémité du bloc de tampon d'ajustement (32) et le cadre de base (100) dans la direction circonférentielle, et,
lorsque le cadre de base (100) est entraîné par une force extérieure, la force de pression subie par le cadre de base (100) est supérieure à la force de friction, mais inférieure à la force d'auto-blocage de l'arbre de sortie (220).

7. Structure de tampon d'actionneur selon l'une des revendications précédentes, **caractérisée en ce que**,
lorsque l'actionneur (200) est démarré, la force d'entraînement de l'actionneur (200) est inférieure à la force d'enclenchement entre la rainure d'embrayage (321) et le bloc d'embrayage (331) dans la direction circonférentielle ; et,
lors de l'entraînement du cadre de base (100) par une force extérieure, la force de pression appliquée au cadre de base (100) est supérieure à la force d'enclenchement et inférieure à la force d'auto-blocage de l'arbre de sortie (220).

8. Structure de tampon d'actionneur selon l'une des revendications précédentes, **caractérisée en ce que**
le bloc de tampon de cadre de base (33) est monté de manière amovible sur le cadre de base (100),
le bloc de tampon de cadre de base (33) est adapté pour coopérer axialement de manière coulissante avec le trou de connexion (320) du bloc de tampon d'ajustement (32) par l'intermédiaire d'un manchon de positionnement (333) prévu au centre ; et
le bloc d'embrayage (331) est disposé sur la face d'extrémité du bloc de tampon de cadre de base (33) de manière à former l'ensemble d'embrayage entre le bloc de tampon d'ajustement (32) et le bloc de tampon de cadre de base (33).

9. Structure de tampon d'actionneur selon la revendication 8, **caractérisée en ce que**
l'ensemble d'embrayage (3) est adapté pour être monté d'abord sur l'arbre de sortie (220), l'actionneur (200) et l'ensemble d'embrayage (3) étant montés ensuite sur le cadre de base (100) ; et
**en ce que** le bloc de tampon de cadre de base (33) est raccordé à la paroi latérale de la deuxième surface de montage (120) par l'intermédiaire de fixations centrales.

10. Structure de tampon d'actionneur selon la revendication 8 ou la revendication 9, **caractérisée en ce que**
la structure de positionnement comprend au moins une surface de limitation horizontale (332) définie sur le côté du bloc de tampon de cadre de base (33), et au moins une surface de positionnement horizontale définie sur le côté de la deuxième surface de montage (120) ;
où le bloc de tampon de cadre de base (33) est de préférence apte pour être étroitement fixé à la surface de positionnement par la surface de limitation (332).

11. Structure de tampon d'actionneur selon l'une des revendications 8 à 10, **caractérisée en ce qu'**un manchon de montage (122) traversant le cadre de base (100) est prévu à l'extrémité de la deuxième surface de montage (120), où
l'axe de l'arbre de sortie (220) est aligné avec l'axe du manchon de montage (122).

12. Structure de tampon d'actionneur selon la revendication 11, **caractérisée en ce que**
l'actionneur (200) est monté d'abord sur le cadre de base (100), l'ensemble d'embrayage (3) étant monté ensuite le long du manchon d'installation (122) sur l'arbre de sortie (220) ;
le bloc de tampon de cadre de base (33) est fixé à l'extérieur du manchon d'installation (122) par une paire de fixations symétriques ;
la structure de positionnement comprend une paire de colonnes de positionnement (123) espacées du côté extérieur du manchon d'installation (122), et une paire de trous de positionnement (3340) espacés du côté du bloc de tampon de cadre de base (33) ; et/ou
le bloc de tampon de cadre de base (33) est apte pour être positionné et s'ajuster aux colonnes de positionnement (123) par les trous de positionnement (3340).

13. Dispositif de rétroviseur, comprenant la structure de tampon d'actionneur selon l'une des revendications précédentes.

14. Dispositif de rétroviseur selon la revendication 13, **caractérisé en ce que**
l'élément de rétroviseur comprend un miroir et/ou une caméra.

15. Véhicule, **caractérisé en ce qu'**il comprend le dispositif de rétroviseur selon la revendication 13 ou la revendication 14.
